Europäisches Patentamt

European Patent Office

Office européen des brevets

(19)

(11) Veröffentlichungsnummer : **0 384 957 B1**

(12) **EUROPÄISCHE PATENTSCHRIFT**

(45) Veröffentlichungstag der Patentschrift :
25.03.92 Patentblatt 92/13

(51) Int. Cl.⁵ : **B62D 1/06**

(21) Anmeldenummer : **89118171.1**

(22) Anmeldetag : **30.09.89**

(54) **Lenkrad mit elektrischer Beheizung und Verfahren zu seiner Herstellung.**

(30) Priorität : **02.03.89 DE 3906576**

(43) Veröffentlichungstag der Anmeldung :
**05.09.90 Patentblatt 90/36**

(45) Bekanntmachung des Hinweises auf die
Patenterteilung :
**25.03.92 Patentblatt 92/13**

(84) Benannte Vertragsstaaten :
**AT CH DE ES FR GB IT LI NL SE**

(56) Entgegenhaltungen :
**EP-A- 0 271 930**
**DE-U- 8 705 717**
**DE-U- 8 708 803**
**FR-A- 2 023 038**
**GB-A- 2 065 430**

(56) Entgegenhaltungen :
**US-A- 2 835 777**
**US-A- 4 194 536**
**REVUE AUTOMOBILE, Band 84, Nr. 8, 24. Februar 1989, Seite 13, Bern, CH; "Trois trouvailles pour améliorer le confort et la sécurité"**
**PATENT ABSTRACTS OF JAPAN, Band 10, Nr. 346 (M-537)(2402), 21. November 1986**

(73) Patentinhaber : **Scheuerer, Michael**
**Spielgartenweg 14**
**W-8075 Vohburg (DE)**

(72) Erfinder : **Scheuerer, Michael**
**Spielgartenweg 14**
**W-8075 Vohburg (DE)**

(74) Vertreter : **Neubauer, Hans-Jürgen, Dipl.-Phys.**
**Fauststrasse 30**
**W-8070 Ingolstadt (DE)**

EP 0 384 957 B1

## Beschreibung

Die Erfindung betrifft ein Lenkrad mit elektrischer Beheizung und ein Verfahren zu seiner Herstellung gemäß dem Oberbegriff des Anspruchs 1.

Bekannte Lenkräder bestehen aus dem Lenkradkranz, den Speichen und der Nabe. Der Lenkradkranz enthält einen Lenkradkern aus festen Werkstoffen, wie Stahl, Aluminium oder Kunststoff und ist üblicherweise mit einer Umhüllung umgeben. Solche Umhüllungen können durch Spritzguß, Reaktionsspritzguß, einem Schäumvorgang, Holz, oder ähnlichen Werkstoffen, gefertigt werden. Eine solche Umhüllung kann noch mit einer Ummantelung aus Leder überzogen sein.

Die bekannten Umhüllungen nehmen die jeweilige Umgebungstemperatur an und fühlen sich bei tiefen Temperaturen unangenehm kalt an und erwärmen sich üblicherweise nur langsam. Neben diesem schlechten Komfort bei tiefen Temperaturen ist aber auch festzustellen, daß solche Umhüllungen in der Regel bei Kälte spröder werden und ihr Dämpfungsverhalten bei einem Körperaufprall im Falle eines Unfalls verschlechtert ist, so daß die Fahrzeugsicherheit insgesamt reduziert ist.

Um hier eine Verbesserung zu schaffen, wurden bereits elektrisch beheizbare Lenkräder vorgeschlagen (DE-OS 33 43 835 oder US-PS 1 934 988). Ein Problem bei solchen elektrisch beheizbaren Lenkrädern besteht in einer rationellen Herstellungsmethode, die insbesondere durch die Anbringung der Heizleiter bestimmt wird. Das üblicherweise vorgeschlagene Umwickeln des Lenkradkerns mit einem Heizdraht ist ersichtlich aufwendig, zeitraubend und nur mit erheblichem aufwand automatisierbar. Bei den Vorschlägen, an der Umfangsseite des Lenkrades einen Heizdraht verlaufen zu lassen, ist für ein gutes Heizverhalten zu wenig Heizdraht vorhanden und die Heizenergie wird flächig zu wenig verteilt. Zudem liegt hier jeweils der Nachteil vor, daß der Heizdraht am Lenkradkern angebracht wird und damit üblicherweise weit ab von der äußeren Grifffläche liegt, die aufgeheizt werden soll. Es wird somit erst der üblicherweise gut wärmeleitende Lenkradkern beheizt und die Heizleistung nach außen ist entweder ohnehin sehr gering oder kommt zeitlich stark verzögert an.

Aufgabe der Erfindung ist es demgegenüber, ein gut funktionsfähiges und rationell herstellbares Lenkrad mit elektrischer Beheizung und ein Verfahren zu dessen Herstellung zu schaffen.

Diese Aufgabe wird mit den Merkmalen der Ansprüche 1 bzw. 7 gelöst.

Gemäß Anspruch 1 enthält ein Lenkrad einen Lenkradkern des Lenkradkranzes, der von einer Umhüllung aus Schaumstoff mit darin eingebrachten elektrischen Heizleitern umgeben ist, wobei die Heizleiter mit der Energieversorgungseinrichtung des Kraftfahrzeugs verbindbar sind. Erfindungsgemäß ist ein Heizleiter aus einem elektrisch leitenden Federdraht eines bestimmten Widerstandes vorgesehen. Der Federdraht ist unter der Umfangsfläche in einem Außenbereich der Umhüllung eingebettet mit nebeneinanderliegenden, klammerartigen, offenen Windungen mit nach außen gerichteter Federkraft. Der Federdraht ist somit in der Weise gewickelt, daß ein Ende einer Drahtklammer bzw. offenen Drahtwindung mit dem danebenliegenden Ende der nächsten Drahtklammer Verbindung hat und das andere Ende dieser nächsten Drahtklammer mit dem danebenliegenden Ende der übernächsten Drahtklammer Verbindung hat usw. Das jeweils eine Ende des Federdrahtes ist mit je einem Pol der Energieversorgung verbindbar.

Bei einem solchen Lenkrad liegt der Heizdraht unmittelbar unter der Oberfläche, wo die Heizwärme für eine schnelle und effektive Aufheizung zweckmäßig erzeugt werden soll. Die besonderen, weiteren Vorteile einer solchen Ausführungsform ergeben sich bei der Herstellung, wie im Zusammenhang mit dem weiter unten beanspruchten Verfahren erläutert wird.

Nach Anspruch 2 wird der Federdraht vorteilhaft mit einer Umhüllung elektrisch isoliert ausgeführt, wodurch ein Kurzschluß sowohl unter den Heizdrahtwindungen als auch möglicherweise zum Lenkradkern vermieden wird. Da der Heizdraht wegen seiner Federeigenschaften weit außen zu liegen kommt und eventuell nicht mehr umhüllt ist, wird mit dem Isolierüberzug vermieden, daß der nackte Draht sichtbar ist.

Diese Ausführung ist daher besonder geeignet für die mit Anspruch 6 vorgeschlagene Ummantelung der Umhüllung mit Leder.

Der Federdraht soll nach Anspruch 3 vor dem Einbau einen Wicklungsdurchmesser haben, der etwas größer als der Querschnittdurchmesser der Umhüllung ist, wodurch beim eingebauten Draht die Federwirkung nach außen geht, was für das Herstellungsverfahren eine Vereinfachung erbringt, wie weiter unten gezeigt wird. Der Durchmesser entspricht dabei etwa einer einseitig offenen Kreisform, die zweckmäßig vor dem Einbau etwas zu einer Ellipsenform gestaucht ist.

Um eine schnelle Aufheizung des Lenkrads zu erhalten, ist es erforderlich, die Heizung mit relativ großer Leistung zu betreiben, die im nachfolgenden Dauerbetrieb eine zu hohe Temperatur am Lenkrad erzeugen würde. Mit Anspruch 4 ist daher vor gesehen, einen Thermostat für eine Temperaturregelung in die Umhüllung mit einzubringen. Nach Anspruch 5 kann diese Thermostatisierung bei einer geeigneten Wahl des heizenden Federdrahts auch dadurch vorgenommen werden, daß ein sogenannter Thermodraht verwendet wird, der seinen Widerstand mit Temperaturveränderungen ebenfalls verändert und daher die Temperaturregelung selbsttätig vornimmt.

Nach dem Verfahren gemäß Anspruch 7 wird in einem ersten Verfahrensschritt der Lenkradkern in eine geteilte Schäumform eingelegt und über seinen Nabenbereich abgestützt und in dem torusförmigen Ring der Schäumform für die Umhüllung zentriert und gehalten. Im zweiten Verfahrensschritt wird der Federdraht mit seiner oben beschriebenen Wicklung in den unteren Teil der Form eingelegt. Wegen seines größeren Wicklungsdurchmessers als der Torusquerschnitt legt sich der Federdraht unter Spannung an die Innenfläche des unteren Teils der Schäumform bereits an. Im dritten Verfahrensschritt wird die Schäumform geschlossen, wodurch der Federdraht von der Außenseite her unter Spannung gesetzt wird und sich dadurch insgesamt an der Innenseite der Schäumform zumindest teilweise anlegt und abstützt. Im vierten Verfahrensschritt wird die Schäumform ausgeschäumt, das umschäumte Lenkrad herausgenommen und gegebenenfalls anschließend mit Leder überzogen.

Dabei werden die beiden offenen Enden des Federdrahtes aus der Umhüllung herausgeführt und über an sich bekannte Maßnahmen, z.B. einen Schleifring in der Lenkradnabe, elektrisch mit der Energieversorgungsanlage verbindbar gestaltet.

Als besonders zweckmäßig hat sich nach Anspruch 8 eine Umhüllung aus PU-Schaum erwiesen und eine elektrische Isolierung des Federdrahts mit Kautschuk-Isolierung. Die Kautschuk-Isolierung hält relativ hohe Temperaturen aus, wodurch diese nicht unmittelbar an den PU-Schaum gelangen und dieser damit nicht verhärtet.

Anhand von Zeichnungen wird eine Ausführungsform der Erfindung mit weiteren Einzelheiten, Merkmalen und Vorteilen näher beschrieben.

Es zeigen

Fig. 1 einen Schnitt durch eine Schäumform, in der ein Lenkradkranz mit eingelegtem Federdraht als Heizleiter geschäumt ist,

Fig. 2 die Art der Wicklung des Federdrahts,

Fig. 3 eine Ansicht des Federdrahts in Axialrichtung,

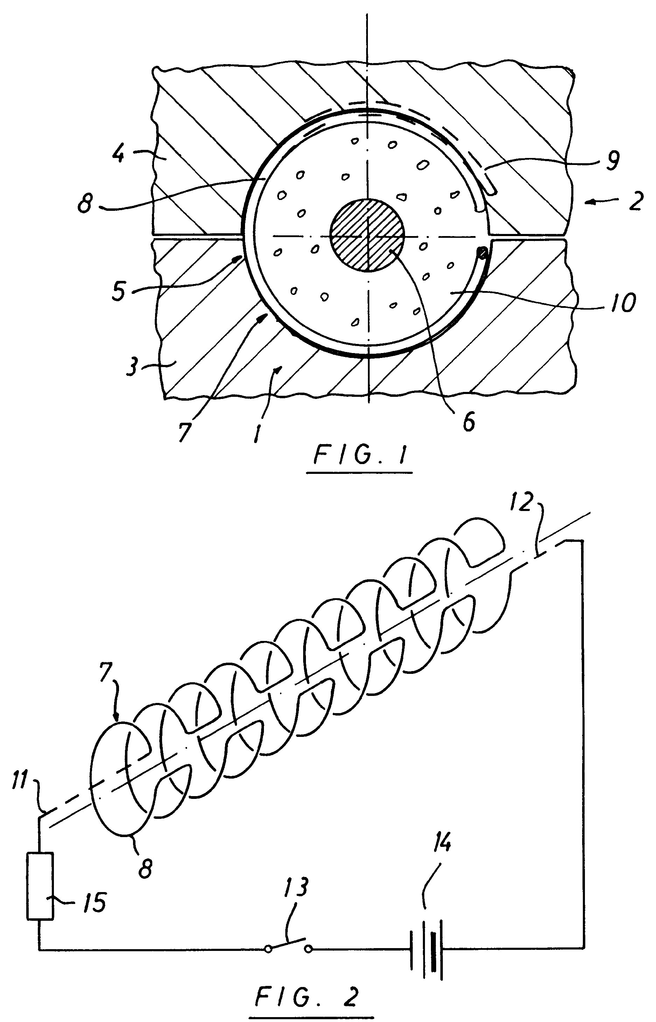

Fig. 1 stellt einen querschnitt durch einen Lenkradkranz 1 dar, der in einer Schäumform 2 hergestellt wird. Die Schäumform 2 besteht aus einem unteren, festen Formteil 3 und einem oberen, aufklappbaren Formteil 4. Beide Formteile tragen ringförmige, halbzylindrische Nuten, die nach dem Zusammenklappen der Formteile 3, 4 den torusförmigen Ring 5 entsprechend der Form des Lenkradkranzes 1 bilden, Zum Einbringen des Schäummaterials in den Ring 5 sind (nicht dargestellte) Zuführkanäle in der Schäumform 2 vorgesehen.

Ein metallischer, ringförmiger Lenkradkern 6 wird vor dem Ausschäumen in das untere Formteil 3 eingelegt, wobei er durch die Lenkrabe an der (nicht dargestellten) Mitte der Schäumform 2 gehalten und in einem Bereich in der Mitte des Rings 5 zentriert und auf Abstand gehalten ist.

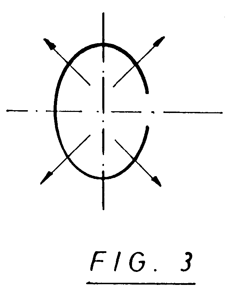

In Fig. 2 ist in perspektivischer, schematischer Darstellung ein Federdraht 7 gezeigt, der als elektrischer Heizdraht in die Schäumform 2 vor dem Schäumvorgang eingelegt wird. Der Federdraht ist dabei so gewickelt, daß jede Windung eine Art von einseitig offener Drahtklammer darstellt, die jeweils fortlaufend mit einer danebenliegenden Drahtklammer endlos zusammenhängt. Damit ergibt sich insgesamt ein Federdrahtgebilde, das aus einem Draht zusammenhängend gebogen ist, jedoch einseitig über seine ganze Länge offen ist.

Damit kann der Federdraht 7 mit seiner einseitigen Öffnung über den Lenkradkern 6 geschoben und vorerst in das untere Formteil 3 eingelegt werden. Der Durchmesser einer Federklammer 8 ist dabei etwas größer gewählt als der Durchmesser des Rings 5. Es hat sich als zweckmäßig erwiesen, jeder Federklammer eine leicht gestauchte, ovale Form zu geben, wie dies (der Anschaulichkeit halber übertrieben) in Fig. 3 dargestellt ist.

Beim Zuklappen des oberen Formteils 4 wird der Federdraht 7 bzw. jede Drahtklammer 8 wegen ihres größeren Durchmessers gegenüber dem Ringdurchmesser radial zusammengedrückt, so daß sich eine Federkraft zur Innenfläche des Rings 5 ergibt und der Federdraht 7 dort anliegt und abgestützt wird. Die Lage einer unbelasteten Federklammer 8 vor dem Aufsetzen des oberen Formteils 4 ist strichliert mit dem Bezugszeichen 9 angedeutet.

Nachdem der Federdraht 7 so eingelegt wurde und das obere Formteil 4 geschlossen wurde, kann der Ring 5 bevorzugt mit PU-Schaum 10 ausgeschäumt werden.

Durch die Art und Anbringung des Federdrahts 7 wird dieser somit in einem äußeren Umfangsbereich des Rings 5, wo eine Heizwirkung auftreten soll, für den Schaumvorgang selbsttätig festgelegt. Ein aufwendiges Umwickeln des Lenkradkerns 6 mit einzelnen, durchgehenden Drahtwindungen entfällt. Zweckmäßig wird der Federdraht 7 mit einer elektrischen Isolierung um geben.

Die freien Enden 11 und 12 des Federdrahts 7 sind aus dem Ringraum 5 herausgeführt und können über einen Schalter 13 zu einem Stromkreis über eine Energieversorgungseinrichtung 14 eines Fahrzeugs geschlossen werden. Zweckmäßig wird ein Thermostat (schematisch mit Bezugszeichen 15 angedeutet) in einem Bereich des Federdrahts 7 mit im Lenkradkranz eingebracht, um die am Lenkrad auftretende Heiztempe-

EP 0 384 957 B1

ratur regeln zu können.

**Patentansprüche**

1. Lenkrad mit elektrischer Beheizung
mit einem Lenkradkern (6) des Lenkradkranzes (1),
mit einer Umhüllung des Lenkradkerns (6) aus Schaumstoff (10) und
mit wenigstens einem in die Umhüllung eingebrachten elektrischen Heizleiter (7), der mit der Energieversorgungseinrichtung (14) eines Kraftfahrzeugs verbindbar ist,
dadurch gekennzeichnet,
daß der Heizleiter aus einem elektrisch leitenden Federdraht (7) eines bestimmten Widerstandes besteht,
daß der Federdraht (7) unter der Umfangsfläche in einem Außenbereich der Umhüllung eingebettet ist mit nebeneinanderliegenden, klammerartigen, offenen Windungen mit nach außen gerichteter Federkraft, so daß der Federdraht (7) in der Weise gewickelt ist, daß ein Ende einer Drahtklammer (8) bzw. offenen Drahtwindung mit dem danebenliegenden Ende der nächsten Drahtklammer Verbindung hat und das andere Ende dieser nächsten Drahtklammer mit dem daneben liegenden Ende der übernächsten Drahtklammer Verbindung hat usw. und
daß jeweils ein freies Ende (11, 12) des Federdrahtes (7) mit je einem Pol der Energieversorgungseinrichtung (14) verbindbar ist.

2. Lenkrad nach Anspruch 1, dadurch gekennzeichnet, daß der Federdraht (7) elektrisch isoliert ist.

3. Lenkrad nach Anspruch 1 oder 2, dadurch gekennzeichnet, daß der Federdraht (7) bzw. eine Drahtklammer (8) im noch nicht verbauten Zustand in axialer Draufsicht einer etwa einseitig offenen Kreisform gegebenenfalls etwas gestaucht entspricht mit einem Durchmesser etwas größer als der Querschnittsdurchmesser der Umhüllung (bzw. Ring 5).

4. Lenkrad nach einem der Ansprüche 1 bis 3, dadurch gekennzeichnet, daß ein Thermostat (15) für eine Temperaturregelung mit in der Umhüllung angebracht ist.

5. Lenkrad nach einem der Ansprüche 1 bis 4, dadurch gekennzeichnet, daß der Federdraht (7) ein sogenannter Thermodraht ist, der für eine Temperaturregelung selbsttätig seinen elektrischen Widerstand verändert.

6. Lenkrad nach einem der Ansprüche 1 bis 5, dadurch gekennzeichnet, daß die Umhüllung mit Leder überzogen ist.

7. Verfahren zur Herstellung eines elektrisch beheizbaren Lenkrads nach einem der Ansprüche 1 bis 6, dadurch gekennzeichnet,
daß eine Schäumform (2) aus zwei Formteilen (3, 4) besteht, die in einer Ebene durch die Kreisfläche eines Lenkrads geteilt und aufklappbar ist und in der ein torusförmiger Ring (5) entsprechend der Außenumhüllung gebildet ist, wobei in einem ersten Verfahrensschritt in die geöffnete Schäumform (2) der Lenkradkern (6) des Lenkradkranzes (1) eingelegt wird, der sich über den Nabenbereich abstützt und im torusförmigen Ring (5) in einer mittleren Lage zentriert wird,
daß in einem zweiten Verfahrensschritt der Federdraht (7) mit seinen nebeneinanderliegenden, klammerartigen, offenen Windungen (8) die im Querschnitt etwas größer als der Torusquerschnitt der Schäumform sind, in den unteren Teil (3) der Schäumform (2) eingelegt wird, wobei er mit den offenen Klammerseiten über den Lenkradkern geschoben wird,
daß in einem dritten Verfahrensschritt die Schäumform (2) geschlossen wird, wodurch der Federdraht (7) von der Außenseite her unter Spannung gesetzt wird und sich dadurch an der Innenseite der Schäumform (2) zumindest teilweise anlegt,
daß in einem vierten Verfahrensschritt die Schäumform (2) ausgeschäumt wird, das umschäumte Lenkrad entnommen wird und gegebenenfalls anschließend mit Leder überzogen wird.

8. Lenkrad oder Verfahren nach einem der Ansprüche 1 bis 7, dadurch gekennzeichnet, daß als Umhüllung PU-Schaum (10) verwendet wird und der Federdraht (7) mit Kautschuk-Isolierung umgeben ist.

**Claims**

1. An electrically heated steering wheel with a stepring wheel core (6) of the steering wheel ring (1), with a cover of the wheel core (6) made of foam (10) and
at least one electric heat conductor (7) introduced into the cover, which conductor can be connected to the energy supply device (14) of a motor vehicle,

4

characterized in that

the heat conductor consists of an electrically conductive spring wire (7) of a specified resistance,

in that the spring wire (7) is embedded under the periphery in an outer zone of the cover with adjoining clip-type open windings with an outwardly directed resilience, so that the spring wire (7) is wound in such a way that one end of a wire clip (8) or open wire winding is connected to the adjoining end of the next wire clip and that the other end of this next wire clip is connected to the adjoining end of the next but one wire clip and so on, and

in that one free end (11, 12) respectively of the spring wire (7) may be connected to one pole of the energy supply device (14).

2. A steering wheel according to claim 1, characterized in that the spring wire (7) is electrically insulated.

3. A steering wheel according to claim 1 or 2, characterized in that before insertion, the spring wire (7) or wire clip (8) corresponds in an axial view to an approximately circular shape open at one side and being possibly slightly squashed, with a diameter somewhat larger than the cross sectional diameter of the cover (or ring (5).

4. A steering wheel according to one of claims 1 to 3, characterized in that a thermostat (15) for the temperature regulation is also arranged in the cover.

5. A steering wheel according to one of claims 1 to 4, characterized in that the spring wire (7) is a so-called thermowire that automatically changes its electric resistance for the temperature regulation.

6. A steering wheel according to one of clamns 1 to 5, characterized in that the cover is covered by leather.

7. A method for the manufacture of an electrically heatable steering wheel in accordance with one of claims 1 to 6, characterized in that

a foam mould (2) consists of two mould parts (3, 4), which mould is subdivided in a plane passing through the circular area of a steering wheel, which can be opened up and wherein a toric ring (5) is formed to correspond to the outer cover, wherein in a first step of the method, the steering wheel core (6) of the steering wheel (1) is inserted into the opened foam mould (2), said wheel being supported in the hub zone and centred in the toric ring (5) in a median position,

in that in a second method step, the spring wire (7) with its adjoining clip-type open windings (8), which in cross section are somewhat larger than the toric cross section of the foam mould, is inserted into the bottom part (3) of the foam mould (2), the spring wire being pushed with the open sides of the clips over the steering wheel core,

in that in a third method step, the foam mould (2) is closed, whereby the spring wire (7) is strained from the outside and because of this, bears at least partly on the inner side of the foam mould (2),

in that in a fourth method step, the foam mould (2) is filled with foam, in that the steering wheel covered by foam is extracted and is subsequently covered by leather, if required.

8. A steering wheel or method according to one of claims 1 to 7, characterized in that PU foam (10) is used for the cover and in that the spring wire (7) is covered by a rubber insulation.


**Revendications**

1. Volant de direction à chauffage électrique, comprenant

une âme (6) de la couronne de volant (1),

un enrobage de l'âme de volant (6) en mousse (10) et au moins un conducteur électrique chauffant (7) qui est placé dans l'enrobage et qui peut être raccordé au système d'alimentation en énergie (14) d'un véhicule automobile,

caractérisé

en ce que le conducteur chauffant est constitué par un fil à ressort électroconducteur (7) ayant une résistance électrique déterminée,

en ce que le fil à ressort est inclus sous la surface périphérique dans une région extérieure de l'enrobage, en formant des spires ouvertes à la manière de crochets qui sont disposées côte à côte et dont la force de ressort est dirigée vers l'extérieur, le fil à ressort (7) étant enroulé de telle manière qu'une extrémité d'un crochet de fil (8), c'est-à-dire d'une spire ouverte de fil, soit reliée à l'extrémité contiguë du crochet de fil immédiatement voisin et que l'autre extrémité de ce crochet de fil immediatement voisin soit reliée à l'extrémité contiguë du troisième crochet de fil, et ainsi de suite, et

en ce que chaque extrémité libre (11, 12) du fil à ressort (7) peut être raccordée à l'un des pôles du système d'alimentation en énergie (14).

2. Volant de direction selon la revendication 1, caractérisé en ce que le fil à ressort (7) est isolé électriquement.

3. Volant de direction selon la revendication 1 ou 2, caractérisé en ce qu'en une vue en direction axiale à l'état non monté, le fil à ressort (7) ou une spire de fil (8) correspond à une forme circulaire ouverte d'un côté, éventuellement un peu aplatie, avec un diamètre un peu plus grand que le diamètre de la section transversale de l'enrobage (ou anneau 5).

4. Volant de direction selon l'une quelconque des revendications 1 à 3, caractérisé en ce qu'un thermostat (15) pour une régulation de température est placé également dans l'enrobage.

5. Volant de direction selon l'une quelconque des revendications 1 à 4, caractérisé en ce que le fil à ressort (7) est un fil dit thermostatique, qui modifie automatiquement sa résistance électrique pour une régulation de la température.

6. Volant de direction selon l'une quelconque des revendications 1 à 5, caractérisée en ce que l'enrobage est garni de cuir.

7. Procédé de fabrication d'un volant de direction à chauffage électrique selon l'une quelconque des revendications 1 à 6, caractérisé

en ce qu'on utilise un moule de moussage (2) en deux parties de moule (3, 4), qui est divisé et peut être ouvert dans un plan passant par la surface circulaire d'un volant de direction et dans lequel est formé un anneau torique (5) correspondant à l'enrobage extérieur, et, dans une première étape du procédé, on place dans le mou le de moussage (2 ) ouvert l'âme (6) de la couronne de volant (1) qui prend appui par la région du moyeu et qui est centrée dans une position moyenne dans l'anneau torique (5),

en ce que, dans une deuxième étape du procédé, on place, dans la moitié inférieure (3) du moule de moussage (2), le fil à ressort (7) dont les spires, ouvertes à la manière de crochets (8) et disposées côte à côte, sont un peu plus grandes, en coupe transversale, que la section transversale du tore du moule de moussage, ce fil étant glissé, par les côtés ouverts des crochets, sur l'âme de volant,

en ce que, dans une troisième étape du procédé, le moule de moussage (2) est fermé, ce qui fait que le fil à ressort (7) est mis sous tension depuis le côté extérieur et, en conséquence, s'applique au moins en partie sur la surface intérieure du moule de moussage (2), et

en ce que, dans une quatrième étape du procédé, le moule de moussage (2) est rempli de mousse, le volant de direction enrobé de mousse est retiré, puis il est éventuellement recouvert de cuir.

8. Volant de direction ou procédé selon l'une quelconque des revendications 1 à 7, caractérisé en ce qu'on utilise, comme enrobage, de la mousse de PU (10) et en ce que le fil à ressort (7) est entouré d'une isolation en caoutchouc.

FIG. 1

FIG. 2

FIG. 3